# EUROPEAN PATENT SPECIFICATION

(11) **EP 4 689 948 B1**
(45) Date of publication and mention of the grant of the patent: **02.09.2026**
(21) Application number: 24804603.9
(22) Date of filing: 20.09.2024
(51) Int. Cl.: G06F 21/53, G06F 21/57, G06F 40/30, G06N 3/045, G06N 20/00, H04L 9/40

(54) **METHOD AND SYSTEM FOR THE AUTOMATIC DETECTION OF CYBER VULNERABILITIES IN AN API**
VERFAHREN UND SYSTEM ZUR AUTOMATISCHEN ERKENNUNG VON CYBERSCHWACHSTELLEN IN EINER API
PROCÉDÉ ET SYSTÈME DE DÉTECTION AUTOMATIQUE DE CYBER-VULNÉRABILITÉS DANS UNE API

(30) Priority: 21.09.2023 IT 202300019449
(43) Date of publication of application: 11.02.2026
(73) Proprietor: Equixly S.r.l., 50124 Firenze (IT)
(72) Inventor: DALLA PIAZZA, Alessio, 50124 Firenze (IT)
(74) Representative: Feltrinelli, Secondo Andrea
(86) International application number: PCT/IB2024/059160
(87) International publication number: WO 2025/062356

(56) References cited:
- US-A1- 2020 036 739
- US-A1- 2021 182 387
- US-A1- 2023 004 651
- US-A9- 2022 103 613

## Description

### TECHNICAL FIELD OF THE INVENTION

The present invention relates to a computer-implemented method for the automatic detection of cyber vulnerabilities in an application programming interface or API, for example having a Representational State Transfer or REST architecture, a GraphQL or gRPC architecture.

Furthermore, the present invention also relates to a system for the automatic detection of cyber vulnerabilities in an application programming interface or API, in particular having a Representational State Transfer or REST architecture, gRPC or a GraphQL architecture as well as a computer program product for the automatic detection of cyber vulnerabilities in an application programming interface or API, in particular having a Representational State Transfer or REST architecture, a gRPC or a GraphQL architecture.

### STATE OF THE PRIOR ART

The importance of application programming interface systems or APIs has increased with the rapid expansion of digital technology.

The term API refers to a set of protocols, tools and standards used to allow different software to communicate with each other. In other words, an API defines how two programs should interact and exchange information.

APIs can be used for different purposes, such as accessing web services, sharing data between different applications or creating plugins and widgets for websites. APIs can be public or private, depending on whether they are accessible to everyone or only to certain developers.

In particular, APIs are often used by programmers to simplify the software development process, as they allow pre-existing functionality to be easily integrated into an application. In this way, developers can focus on creating new functionality instead of having to repeat the same work already done previously. In general, APIs provide a way to interact with a software or service without directly accessing the source code.

As can be understood, the API implementation can provide access to critical data and services, which can be vulnerable to threats and cyber attacks.

With reference to an API having a Representational State Transfer or REST architecture, it is an API that uses the REST architectural standard to define the structure and behavior of API calls.

REST is a software architecture that is based on the HTTP (Hypertext Transfer Protocol) protocol for the transmission of data between a client device and a server device.

The REST architecture defines a set of API design principles, such as the use of URLs (Uniform Resource Locators) to identify resources, the use of HTTP methods, such as GET, POST, PUT, PATCH, DELETE methods, to specify operations, and the use of standard data formats, such as JSON or XML, to exchange data.

REST APIs are therefore designed to be stateless, meaning that each request must contain all the information necessary to satisfy that request and the server device must not store any state between requests. In this way, REST APIs can scale and handle a large number of concurrent requests.

In general, APIs, including REST APIs, are widely used for building web services and web applications, as they allow separating the front end from the back end and providing a standardized programming interface to access data and server functionality. APIs facilitate the exchange of information between private services, such as in backend-to-backend communication scenarios.

In the API landscape, gRPC is a technology for communication between services. gRPC, also a form of API, uses Google's Protobuf (Protocol Buffers) format to define services and send messages. This framework provides a service API that supports bidirectional communication and streaming, enabling a contract-based programming model. As a RPC (Remote Procedure Call) framework, gRPC allows developers to create services that can be called from a remote client, as if they were local procedures or methods, making the deployment of services and applications more scalable and efficient. With reference to APIs with a GraphQL architecture, they allow clients to specify precisely the data they need and get only that, instead of receiving an entire JSON or XML document. The GraphQL architecture is generally based on a single API that exposes a typed schema that describes the entire underlying data graph.

In a GraphQL API, a client device sends a request to the GraphQL server device, specifying the set of data it needs, called a "query." The GraphQL server device processes the "query" and returns only the data requested by the client device, in JSON or another data format.

The GraphQL architecture is highly flexible and modular, allowing to easily add or remove fields from the schema and extending the API with new types and operations. Additionally, GraphQL can handle complex data relationships, thanks to its ability to nest queries to request data from multiple sources at once.

In the state of the art, various types of API security testing approaches are provided. Such approaches may include security or penetration testing of the APIs before their deployment in a production environment, a review of the API design documents by various human resources, and analysis of the source code.

In general, such approaches can be time-consuming, error-prone, and may detect problems at a stage where remediation may be complex and resource-intensive.

Furthermore, currently, in each security or penetration test of an API, the intervention of an operator experienced in cybersecurity is foreseen to manually perform most of the operations.

As can be understood, human intervention significantly increases the time and costs for performing security or penetration tests and, often, is also subject to inaccuracies and/or inefficiencies, especially in the case of structurally complex and large APIs.

Documents US2021182387A1 and US2022103613A9 describe solutions according to the state of the prior art.

It is therefore advantageous and necessary to design and produce a computer-implemented method and a system for the automatic detection of cyber vulnerabilities and errors in an application programming interface or API, which allows to overcome the disadvantages of the known art listed above.

### OBJECTS OF THE INVENTION

The technical task of the present invention is therefore to improve the state of the art in the field of methods and systems for the detection of cyber vulnerabilities and/or errors in an application programming interface or API.

An object of the present invention is to provide a method and a system for the automatic detection of cyber vulnerabilities in an application programming interface or API, which allows to automate all the operations that in the methods and systems provided in the state of the art are instead performed manually by specialized cyber security operators.

Another object of the present invention is to provide a method and system for the automatic detection of cyber vulnerabilities in an application programming interface or API, which allows to reduce the time required to detect cyber vulnerabilities in an API.

Yet another object of the present invention is to provide a method and system for the automatic detection of cyber vulnerabilities in an application programming interface or API that allows for an improved scalability in detecting cyber vulnerabilities in an API.

Finally, a further object of the present invention is to provide a method and a system for the automatic detection of cyber vulnerabilities and errors in an application programming interface or API that allows to reduce the costs necessary for the detection of cyber vulnerabilities and/or errors in an API.

This task and these objects are achieved by a method according to claim 1.

This task and these objects are also achieved by a system according to claim 8 as well as by a computer program or software product according to claim 10.

The dependent claims refer to preferred and advantageous embodiments of the invention.

### BRIEF DESCRIPTION OF THE DRAWINGS

Other features and advantages of the invention will be more evident from the description of an embodiment of a method and a system for the automatic detection of cyber vulnerabilities in an application programming interface or API, illustrated by way of example in the attached drawings in which:

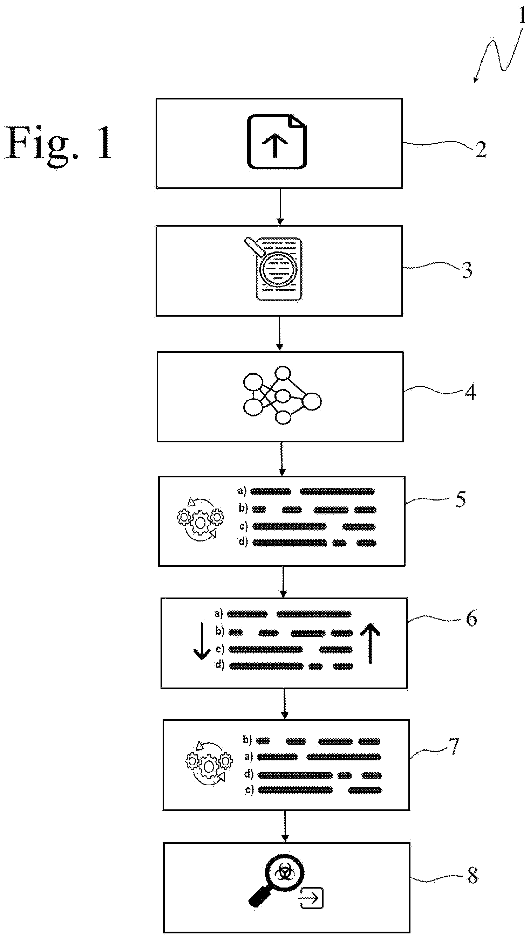

- figure 1 is a block diagram of a computer-implemented method for the automatic detection of cyber vulnerabilities in an application programming interface or API, in particular having a Representational State Transfer or REST architecture according to an embodiment of the present invention,

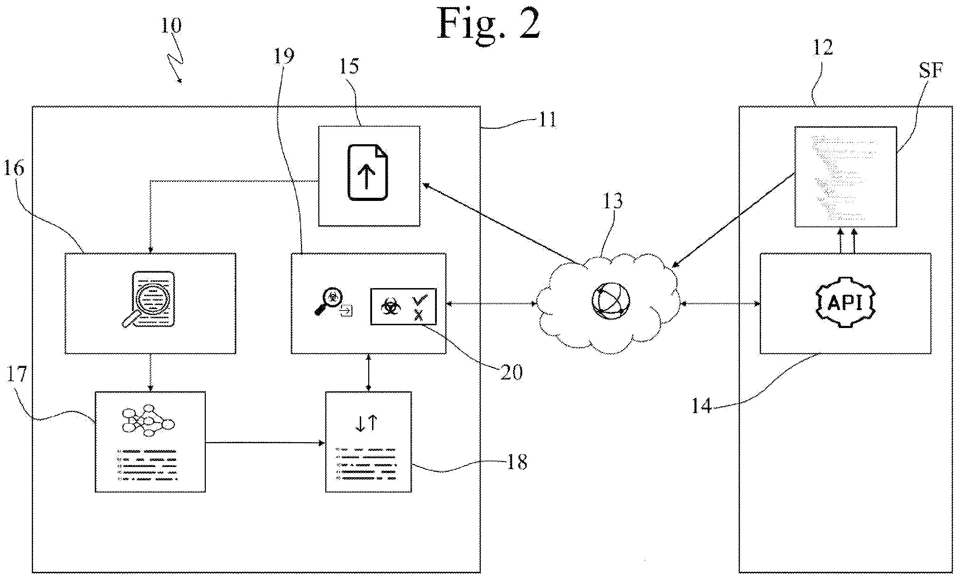

- figure 2 is a block diagram of a system for the automatic detection of cyber vulnerabilities in an application programming interface or API, according to an embodiment of the present invention,
- figure 3 shows an example of a data file or API specification file compatible with the method and the system according to the present invention.

In the attached drawings, identical parts or components are identified by the same reference numbers.

### EMBODIMENTS OF THE INVENTION

With reference to the attached figures, the number 1 indicates overall a computer-implemented method 1 for the automatic detection of cyber vulnerabilities in an application programming interface or API, in particular having a Representational State Transfer or REST type architecture, according to a non-limiting embodiment of the present invention.

In this discussion, when referring to REST APIs, it is clear that this terminology is intended to also include any type of API, as the latter can be considered a subset of APIs.

It should be noted that the present invention is not limited to APIs having a REST or GraphQL architecture, but the same can be used for the automatic detection of cyber vulnerabilities in APIs having different types of architectures such as on gRPC.

It should also be noted that with "cyber vulnerability" it is intended a weak point or flaw in the software or hardware of a computer system and, in particular, of an API, which can be exploited by an attacker to gain unauthorized access or cause damage to the system.

In this sense, cyber vulnerabilities can be the result of programming errors, incorrect configurations, lack of security updates or other causes. In this regard, detecting or scanning for any cyber vulnerabilities in an API before putting it into production is a fundamental step, since these, if not properly resolved, could potentially be exploited by attackers to steal sensitive information, install malware, interrupt services or cause other damage to the system or to the data.

By way of non-limiting example, a cyber vulnerability could be a security bug or error in the API source code or even a misconfiguration of the server device serving the API.

The method according to the present invention initially comprises the step of receiving and/or reading 2 at least one data file or API specification file associated with or describing an API to be tested, for example a specification file for a REST API or a GraphQL API.

In particular, the data file or API specification file includes information about the API endpoints, that is the location of the resources in that API, and the operations that can be performed in each API endpoint with those resources.

As will be better understood from the description of a system according to the present invention, which will be presented below, optionally, the data file or API specification file can be loaded from a client device onto a server device connected to the client device via a telematic network, the server device comprising a processor having a memory with stored a plurality of instructions for executing the method according to the present invention or according to non-limiting embodiments of the present invention.

In the present discussion, the term "resource" is intended to be a data or functionality element that can be uniquely identified through a URI (Uniform Resource Identifier). In particular, resources or services are to be considered as the main entities accessed through API calls and essentially represent data or functionality that can be manipulated through the API.

More specifically, each resource in a REST API can be manipulated by means of standard HTTP methods, such as GET, POST, PUT and DELETE, and optionally OPTIONS, HEAD, PATCH, TRACE and CONNECT.

In general, therefore, the operations available in a REST API are mapped to HTTP methods, preferably according to the CRUD scheme, namely Create, Read, Update and Delete.

So, for example, a client can make an HTTP POST request to create a new resource (Create), an HTTP GET request to a resource URI to retrieve data associated with that resource (Read), an HTTP PUT request to update data associated with the resource (Update), and an HTTP DELETE request to delete the resource (Delete).

In the present discussion, the term "API endpoint" is intended to be the location of a resource within the API itself, identified by a URL (Uniform Resource Locator). In other words, the API endpoint is to be considered as an access point to a specific resource or operation that the API provides.

For example, a user management API might have the following endpoints:
- "api.example.com/users" with an HTTP GET request to retrieve the list of users,
- "api.example.com/users/{user_id}" with an HTTP GET request to retrieve information for a specific user,
- "api.example.com/users" with an HTTP POST request to create a new user,
- "api.example.com/users/{user_id}" with an HTTP PUT request to update the information of a user, and
- "api.example.com/users/{user_id}" with an HTTP DELETE request to delete a user.

In this case, each endpoint represents the location of a resource, possibly associated with a specific operation of the user management API.

In addition, endpoints in an API can also be of different types, for example:
- data access endpoint, used to retrieve, create, update, or delete data,
- operations endpoint, used to perform operations such as calculating a result or performing another action,
- security endpoint, used to manage authentication and authorization of users accessing the API.

With reference to an HTTP request, it is a message sent from a client device to a server device to request a resource. From an analytical point of view, an HTTP request is typically composed of several parts, namely:
- request line, which is the first line of the message and contains the HTTP method (GET, POST, PUT, DELETE, etc.), the URI of the requested resource and the HTTP protocol version used,
- header, which includes a series of header fields that provide additional information about the request, such as the type of data accepted by the client device, the encoding type, the preferred language, the authentication type, etc.,
- request body, which is the optional section of the message that contains the data sent from the client device to the server device, such as HTML form data in an HTTP POST request.

Preferably, the data file or API specification file received and/or read by method 1 is a file written according to the OpenAPI or OAS specification, that is a language used to write descriptions and/or documentation for REST APIs.

This specification, also known as "Swagger" up to its 2.0 version, allows to define API descriptions that are independent of the programming language. From the descriptions, it is possible to obtain interactive documentation and generate code for server and client devices. The descriptions are written using two formats, namely JSON or YAML.

Alternatively, the data file or API specification file could also be written according to another API specification file, for example according to GraphQL specification, RAML, API Blueprint, JSON API, HAL API, gRPC, SOAP.

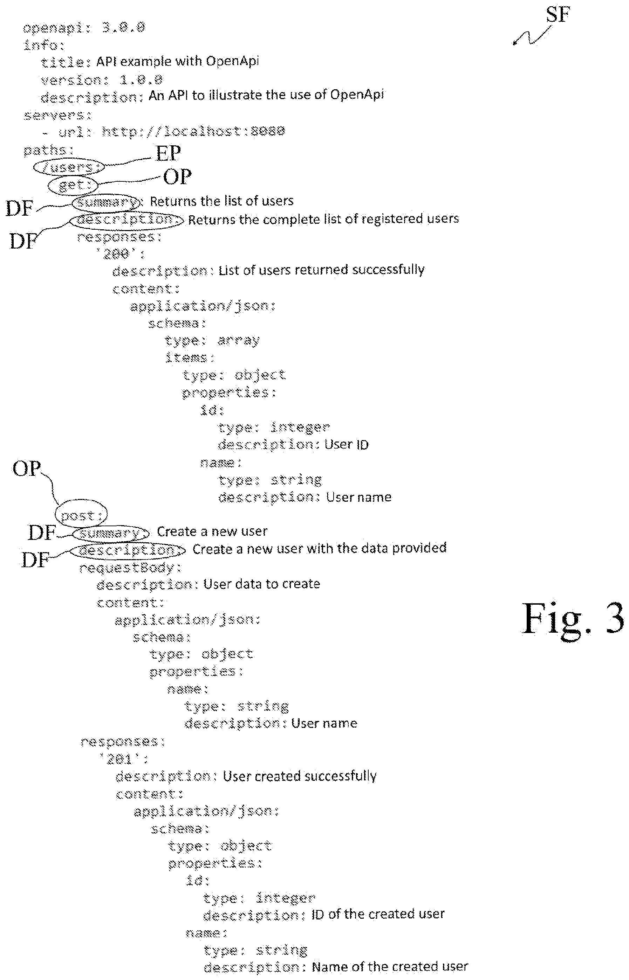

Figure 3 shows a non-limiting example of a data file or API specification file, indicated as a whole by the reference number FS, according to the OAS specification in YAML format.

With reference to this figure, each OpenAPI specification file opens with a section dedicated to metadata, where some information about the API is specified (title, description, version, termsOfService, etc.).

The server section lists the base URLs for the API. All paths that appear in the subsequent section are relative to the specified base URL.

In particular, the paths section defines the API endpoints, indicated with the reference number EP. For each endpoint, the supported HTTP methods are specified. Each operation, indicated with the reference number OP, includes an optional parameters section, an optional requestBody section and a Responses section. Regarding the Responses section, it allows to specify which are the possible HTTP status codes (200, 404, 403, etc.) and for each code the response body scheme.

Returning to focus the description on the method according to the present invention, it then comprises the step of extracting and analyzing 3 the information of such data file or API specification file.

Preferably, the step of extracting and analyzing 3 comprises the step of parsing the data file or API specification file, for example by means of regular expressions, namely sequences of characters that define a pattern or text model to be searched for within a string, parsing libraries and/or automatic parsers and/or proprietary modules, and advantageously the step of determining dependencies or references between the API endpoints of the data file or API specification file, namely when an API endpoint depends on another API endpoint for its correct functioning, for example by means of a heuristic algorithm, a fuzzy string matching algorithm, a stemming algorithm, a clustering and natural language processing algorithm and/or a combination of one or more of such algorithms.

In general, the step of extracting and analyzing 3 can be performed by a suitable tool for extracting and analyzing information from the data file or API specification file, such as Swagger Parser, Swagger Inspector, OpenApi Parser, Stoplight Spectral and/or APIMATIC Transformer and/or other parsing libraries and/or other proprietary modules, namely tools that allow to extract and analyze information from the data file or API specification file, in particular from the data file or API specification file written according to the OAS specification.

For example, considering the use of the Swagger Parser tool or in general of a proprietary module, the data extraction and analysis preferably includes the following steps:
- parsing of the data file or API specification file, where the data file or API specification file is parsed and split into one or more JSON objects, which represent different parts of the API specification, such as model definitions, API operations, and documentation information,
- validation of the data file or API specification file, where the data file or API specification file is validated against the JSON scheme of the API specification, to verify that it is correctly structured and meets the validity requirements of the API,
- resolution of dependencies or references contained within the data file or API specification file, where the proprietary module automatically resolves dependencies or references within the API specification, which may be used to define objects such as models, parameters, or responses in multiple parts of the specification, and
- generation of the object model, where the proprietary module generates an object model of the data file or API specification file of the API, which represents the structure of the API and its relationships. This template can be used to perform advanced operations such as automatically generating code for the API.

Then, the method according to the present invention comprises the step of semantically classifying 4, using the information extracted in the step of extracting and analyzing 3 and by means of a natural language processing or NLP algorithm, each operation available for each API endpoint and/or each API endpoint by assigning it to a respective class of operations of a preset plurality of classes of operations, each class of operations being associated with a given functionality or semantics of an operation and/or with a given typology or functionality or semantics of an API endpoint and comprising at least a first character string that identifies it.

In essence, the step of classifying 4, is able to semantically classify or categorize each operation available for each API endpoint and/or each API endpoint.

With reference to this aspect, a class of operations could therefore be associated with a specific functionality or semantics of an operation, for example, to a respective HTTP method and/or to a type of API endpoint.

By way of non-limiting example, a possible pre-set plurality of classes of operations could be identified by means of the following classes:
- "Create" class, associated with operations that perform HTTP POST requests,
- "Read" class, associated with operations that perform HTTP GET requests,
- "Update" class, associated with operations that perform HTTP PUT or PATCH requests,
- "Delete" class, associated with operations that perform HTTP DELETE requests,
- "Account" class, associated with the API endpoint type for creating a new user profile in the API,
- "Login" class, associated with the API endpoint type for authenticating a user to access the API.

As can be understood, the classes of CRUD operations (Create, Read, Update, Delete) associated with the respective HTTP methods are preferably always present while any other classes of operations inherent to the typology or functionality or semantics of an API endpoint can be preset according to the structure of the API itself and therefore can be variable.

Preferably, the step of semantically classifying 4 comprises the steps of:
- identifying, for a given operation of a respective API endpoint present in the data file or API specification file and/or for an API endpoint, at least one first field or attribute describing or identifying such operation and/or such endpoint, which comprises at least one second character string,
- comparing the at least one second character string with each respective first character string of the plurality of classes of operations,
- calculating a corresponding semantic similarity value between the at least one second character string, optionally between a sentence comprising multiple second character strings, and each first character string of the plurality of classes of operations by means of the NPL algorithm,
- associating the operation with a corresponding class of operations based on the maximum semantic similarity value calculated between the at least one second string and each first string, and
- iterating the previous steps for each operation of each API endpoint and/or for each API endpoint.

Advantageously, the at least one first description or identification field or attribute may be at least one field or attribute named "name", "description", "summary" and/or "operationID" contained within the data file or API specification file, in general therefore a field or attribute descriptive of the functionality or semantics of a given operation.

In the example of data file or API specification file illustrated in figure 3, the "description" and "summary" fields or attributes identify the functionality or semantics regarding the HTTP GET request with reference to the "/users" API endpoint, namely returning or reading the list of users.

Advantageously, the step of calculating comprises the steps of:
- providing a neural network, preferably of at least two levels, trained, by means of a corpus of texts comprising a plurality of words, to associate each word of the corpus of texts to a given semantic context as a function of the semantics of the words preceding or following it in a sentence, and
- using such neural network to process a semantic similarity value between the at least one second character string and each first character string of the preset plurality of classes of operations.

With reference to the step of providing, preferably, it includes the step of using a distributed representation of words or word embedding, namely a technique of representing words in vector form, which includes assigning to each word of the corpus of texts a dense numerical vector of fixed size, which represents the semantic meaning of the word.

Optionally, alternatively or in addition to the word embedding, a machine learning model based on transformers and used in natural language processing could be used.

Basically, word embedding tries to find a vector representation that reflects the meaning of the words in the context in which they are used. This means that, for example, words that often appear in similar contexts, such as "car" and "automobile", will have similar vectors, while words that appear in different contexts, such as "car" and "boat", will have more distant vectors.

Specifically, the neural network provided in the above step is trained and used to learn the vector representation of the words and perform the semantic classification task.

For example, the Word2Vec algorithm can be used to perform the step of providing, which uses a neural network to learn the representation of words, so that similar words are represented by similar vectors.

Optionally, the semantic similarity value can be a numeric value, possibly between 0 and 1.

So, for example, two synonyms will have a similarity value close to 1, if desired between 0.9 and 1, two words with similar but not identical meanings will have a semantic similarity value close to 1, if desired between 0.5 and 0.9, while two words with different meanings will have a semantic similarity value close to 0, if desired between 0 and 0.2.

It should be considered that, preferably, the at least one first description or identification field or attribute is considered to be composed of multiple second character strings following the detection of a space or a punctuation character or a change of "case", namely the passage from a lowercase character to an uppercase character or vice versa.

With reference, for example, to the data file or API specification file illustrated in figure 3, the description or identification field or attribute, indicated with the reference number DF, called "summary" contains four character strings, namely "Returns", "list", "of" "users" where in particular the string "Returns" is very significant for a possible classification as it is semantically or functionally very similar to the meaning of the "Read" class associated with the HTTP GET method.

Preferably, the step of associating includes the steps of:
- setting a threshold similarity condition, and
- assigning the operation to a corresponding class of operations only if the maximum semantic similarity value calculated between the at least one second string and each first string satisfies such threshold similarity condition.

Optionally, the similarity threshold condition can be the exceeding of a certain numerical value, for example the exceeding of the numerical threshold 0.3 by the semantic similarity value. Clearly, this numerical threshold is provided only as an example, since it could be different depending on the trade-off between robustness and accuracy that one wants to obtain for the classification.

In such a case, the classification of a given second character string will be considered as completed and, therefore, assigned to a respective class of operations only if its semantic similarity value with the first character string identifying that class of operations satisfies the similarity threshold condition, for example it exceeds the numerical threshold of 0.3.

Subsequently, method 1 involves the step of generating or processing 5 at least a first sequence of API operations based on the semantic classification carried out in the previous step. In other words, at least a first sequence of semantically classified operations will be generated or processed.

Then, the method according to the present invention comprises the step of logically sorting, by means of a machine learning or ML algorithm, the at least one first sequence of operations generated or processed in the previous step by identifying the logical constraints that link the precedence relationships between the operations of the at least one first sequence of operations.

In this regard, it can be understood how it is often not possible to perform a first operation if a second operation has not been performed first because, for example, this first operation creates a resource necessary to correctly perform the second operation that otherwise would not be performed or, in any case, would be performed incorrectly. Consider, for example, a second operation that creates a second resource which, however, in order to be created, requires the presence of a first resource, for example created by the first operation or, again, a second operation that eliminates a first resource which, however, should have already been created, for example by the first operation.

Such constraints that link the precedence relationships between the operations of an API are therefore essential to be able to automatically test the latter correctly.

The method according to the present invention, in the logical sorting step, allows to automatically learn such constraints and logically sort the operations of at least a first sequence of operations so as to be able to test it subsequently in an adequate way in order to detect any cyber vulnerabilities.

Preferably the logical sorting step is performed using a reinforcement learning algorithm.

In this case, the logical sorting step 6 advantageously comprises the steps of:
- using an autonomous agent to perform or simulate the execution of the operations of the at least one first sequence of semantically classified operations, rewarding such autonomous agent by means of a numerical reward value or positive reinforcement for each success in the test attempt to perform a certain operation and penalizing such autonomous agent by means of a numerical penalty value or negative reinforcement for each failure in the test attempt to perform a certain operation, and
- guiding such autonomous agent in learning the logical constraints that link the precedence relations between the operations of the at least one first sequence of operations through the observation of the positive or negative reinforcements obtained in the test attempts to perform each of the operations of the at least one first sequence of operations.

In practice, the numerical reward and penalty values or positive and negative reinforcements are provided to the autonomous agent to respectively encourage and discourage correct and incorrect behaviors of the latter. According to this procedure, the autonomous agent is able to learn even the correct sorting constraints between operations that are not documented within the data file or API specification file.

With the terms "autonomous agent" and in the context of a reinforcement learning algorithm, it is meant an artificial intelligence entity capable of autonomously learning how to act in a certain environment to arrive at implementing a decision-making strategy that maximizes its rewards, namely to maximize the obtaining of positive reinforcements.

Following this step of logically sorting 6, it is provided the step of generating or processing at least a second sequence of operations of the API based on the logical sorting of the at least one first sequence of operations carried out in the previous step.

In essence, the at least one second sequence of operations is a sequence of operations classified semantically and sorted logically.

Finally, the method according to the present invention comprises the step of performing 8 a security or penetration test of the API by testing the at least one second sequence of operations by at least one respective attack module, namely a data file that when executed generates at least one request or call to such API that executes or simulates at least one security attack associated with the execution of each operation of the at least one second sequence of operations, and if at least one security attack executed via the respective attack module is successful, detecting a cyber vulnerability of the API.

In general, with security or penetration test of the API it is intended a type of cyber security testing that is used to evaluate the security of an API by exposing it to attack simulations by a group of cyber security experts, who in the case of the present invention are no longer present and/or necessary since they have been replaced by automatic attack modules.

With respect to the at least one security attack, it may include, for example, at least one, more, or all of:
- injection attacks, which allow an attacker to insert malicious data into the API parameters, in order to compromise the system. For example, a SQL injection attack can be used to execute malicious queries against the underlying database,
- Cross-Site Scripting (XSS) attack, which allows an attacker to inject malicious JavaScript code into the API. This can allow the attacker to perform malicious actions or steal sensitive information,
- Cross-Site Request Forgery (CSRF) attack, where the attacker exploits the user's trust to perform malicious actions. For example, the attacker may send a spoofed request that appears to come from the legitimate user, in order to perform a malicious action on their behalf,
- Denial-of-Service (DoS) attacks, which attempt to overload the API with a large number of requests, in order to prevent legitimate users from using the system,
- Man-in-the-Middle (MitM) attacks, in which the attacker intercepts communications between the user and the API, in order to steal sensitive information or manipulate data, and
- Session Hijacking attacks, which exploit a vulnerability in the API that improperly handles user authentication sessions. In this type of attack, the attacker steals the legitimate user's session ID and uses it to impersonate the user,
- Broken Object Level Authorization (BOLA) attack, where the attacker tries to access API resources that they do not have permission to access, which is possible if the API does not implement object authorization properly,
- Mass Assignment attack, where the attacker tries to modify the properties of an object that they do not have permission to access. For example, the attacker could modify the details of a user or transaction.

Clearly, the list of attacks presented above is an exemplary and non-limiting list, since there are several additional types of security attacks against an API that can be implemented in a respective attack module.

By way of non-limiting example, for better understanding, a possible attack performed using the attack module in the context of the execution of a PUT operation of the at least one second sequence of operations is provided below.

Let's assume that the API is a banking API that allows users to change their basic profile information. For this, it is necessary to make a call to the API using a PUT operation, for example to the following endpoint "/api/v1/users/me" with the following JSON object {"user_name": "Jean_Luis", "age": 58}.

The HTTP request may include an additional "credit_balance:" property, namely {"user _name": "Jean_Pierre","age": 58,"credit_balance": 200}.

The attack could replay the request with a custom "credit_balance" field, namely with an HTTP request like {"user _name": "Stephan","age": 25,"credit_balance": 5000}.

In this scenario, the attack attempts to reproduce the API call to increase the credit card balance without paying the corresponding amount. The attack may be successful if there are no controls on ownership assignments.

If desired, the detection of at least one cyber vulnerability may also include the generation of a vulnerability report of the tested API or may include the generation of a graphical interface that illustrates any information or reports relating to the at least one cyber vulnerability detected and/or also any suggestions on how to resolve such at least one cyber vulnerability.

In particular, the method according to the present invention preferably uses a "black-box" testing approach, namely, an approach that focuses on the external behavior of the API without knowing its internal structure or operation, such as the source code, internal design and implementation of the system, or a "grey-box" approach, namely an approach that exploits partial knowledge of some of the internal workings of the API. This has several advantages, such as the ability to focus on the end-user perspective and identify problems that may arise during actual use of the system, as well as saving time and/or resources.

Subject-matter of the present invention is also a system 10 for the automatic detection of cyber vulnerabilities in an application programming interface or API, in particular having a Representational State Transfer or REST type architecture or a GraphQL architecture, comprising:
- a server device 11,
- a client device 12, in electronic communication with the server by means of a telematic network 13, comprising an API 14 to be tested and at least one data file or API specification file SF associated with the API 14, the data file or API specification file SF comprising information relating to the API endpoints, namely the location of the resources in the API 14, and the operations that can be performed in each API endpoint with those resources.

In particular, the server device 11 comprises:
- a module or component for receiving and/or reading 15 the data file or API specification file SF,
- a module or component for extracting and analyzing 16 the information from the data file or API specification file SF,
- a classification module or component 17 configured to receive input information from the extraction and analysis module or component 16 and semantically classify, by means of a natural language processing or NLP algorithm, each operation available for each API endpoint and/or each API endpoint by assigning it to a respective class of operations of a pre-set plurality of classes of operations, each class of operations being associated with a specific functionality or semantics of an operation and/or a specific typology or functionality or semantics of an API endpoint and comprising at least a first character string that identifies it, and therefore configured to provide at least a first sequence of semantically classified operations as output,
- a sorting module or component 18 configured to receive as input the at least one first sequence of semantically classified operations and to logically sort them, by means of a machine learning algorithm or ML, identifying the logical constraints that link the precedence relationships between the operations of the at least one first sequence of operations, and therefore configured to provide at least a second logically sorted sequence of operations as output,
- a test module or component 19 configured to test the at least one second sequence of operations by means of at least one respective attack module, namely a data file that when executed generates at least one request or call to the API 14 that executes or simulates at least one security attack associated with the execution of each operation of the at least one second sequence of operations, and
- a detection module or component 20, optionally included in the test module or component 19, configured to detect, if at least one security attack carried out using the respective attack module has been successful, a cyber vulnerability of the API 14.

Preferably, the server device 11 is configured to perform the method according to the present invention or according to non-limiting embodiments of the present invention.

In other words, each module or component of the aforementioned system 10 is advantageously configured to implement the essential and/or preferred and/or optional and/or specific functionalities of the method described above.

In essence, the components or modules of the system 10 may comprise the essential and/or optional features and/or functionalities of the method 1 according to the present invention or according to non-limiting embodiments of the present invention.

Subject-matter of the present invention is also a computer program or software product for the automatic detection of cyber vulnerabilities in an application programming interface or API, in particular having a Representational State Transfer or REST type architecture or a GraphQL architecture, loaded into a memory of a processor of a server device 11 of a system 10 according to the present invention or according to non-limiting embodiments of the present invention, the computer program or software comprising a plurality of instructions to cause that, when executed by the processor, the server device 11 carries out the method according to the present invention or according to non-limiting embodiments of the present invention.

The method and system described above allow the automatic detection of cyber vulnerabilities in an application programming interface or API, in particular having a Representational State Transfer or REST architecture or a GraphQL architecture, in fact, automating all the operations that in the methods and systems provided in the state of the art are instead performed manually by specialized computer security operators.

In this sense, the method and system described above allow to reduce the time to detect cyber vulnerabilities in an API, since the manual verification and testing operations typically performed by the security expert ("pentester"), are completely automated.

Furthermore, the method and system described above allow for better scalability in detecting cyber vulnerabilities in an API, since the computational efficiency of a computer and the automation of the penetration test allow for scanning even structurally complex and large APIs in a short time.

Moreover, the method and system described above also reduce the costs necessary for the detection of cyber vulnerabilities in an API, since it is no longer necessary to keep a security expert busy for several hours to perform or supervise the penetration test of an API.

It has thus been seen how the invention fully achieves the proposed objects.

Modifications and variations of the invention are possible within the scope of protection defined by the claims.

## Claims

1. Computer-implemented method (1) for the automatic detection of cyber vulnerabilities in an application programming interface, API, comprising the steps of:
- receiving and/or reading (2) at least one API specification file associated with or descriptive of an API to be tested, said API specification file including at least information relating to API endpoints, that is the location of the resources in said API, and the operations that can be performed in each API endpoint with said resources,
- extracting and analyzing (3) said information from said API specification file,
- semantically classifying (4), using said information extracted in said step of extracting and analyzing (3) and by means of a natural language processing or NLP algorithm, each operation available for each API endpoint and/or each API endpoint by assigning it to a respective class of operations of a pre-set plurality of classes of operations, each class of operations being associated with a certain functionality or semantics of an operation and/or with a certain typology or functionality or semantics of an API endpoint and including at least a first character string that identifies it,
- generating or processing (5) at least a first sequence of operations of said API based on the semantic classification carried out in the previous step,
- logically sorting (6), using a machine learning or ML algorithm, said at least one first sequence of operations generated or processed in the previous step by identifying the logical constraints that link the precedence relationships between the operations of said at least one first sequence of operations,
- generating or processing (7) at least a second sequence of operations of said API based on the logical sorting of said at least one first sequence of operations carried out in the previous step,
- performing (8) a penetration test of said API by testing said at least one second sequence of operations using at least one respective attack module, that is a data file which when executed generates at least one request or call to said API which executes or simulate at least one security attack associated with the execution of each operation of said at least one second sequence of operations, and if said at least one security attack executed via the respective attack module has been successful, detecting a cyber vulnerability of said API.

2. Method according to the previous claim, wherein said extracting and analyzing step (3) includes the steps of:
- parsing said API specification file, and
- determining the dependencies or references between the API endpoints of said API specification file.

3. Method according to any one of the previous claims, wherein said step of semantically classifying (4) comprises the steps of:
- identifying, for a given operation of a respective API endpoint present in said API specification file and/or for an API endpoint, at least a first field or attribute describing or identifying that operation and/or that endpoint, which includes at least a second character string,
- comparing said at least one second character string with each respective first character string of said plurality of classes of operations,
- calculating a corresponding semantic similarity value between said at least one second character string and each first character string of said plurality of classes of operations by means of said NPL algorithm,
- associating said operation with a corresponding class of operations based on the maximum semantic similarity value calculated between said at least one second string and each first string, and
- iterating the previous steps, that is the step of identifying, comparing, calculating and associating, for each operation of each API endpoint and/or for each API endpoint.

4. Method according to the previous claim, wherein said calculating step includes the steps of:
- providing a trained neural network, using a corpus of texts comprising a plurality of words, to associate each word of said corpus of texts with a specific semantic context based on the semantics of the words preceding or following it in a sentence, and
- using said neural network to process a semantic similarity value between said at least one second character string and each first character string of said pre-set plurality of classes of operations.

5. Method according to claim 3 or 4, wherein said associating step comprises the steps of:
- setting a similarity threshold condition, and
- assigning said operation to a corresponding class of operations only if the maximum semantic similarity value calculated between said at least one second string and each first string satisfies said similarity threshold condition.

6. Method according to any of the preceding claims, wherein said logically sorting step (6) is performed by a reinforcement learning algorithm.

7. Method according to the previous claim, wherein said logically sorting step (6) includes the steps of:
- using an autonomous agent to perform or simulate the execution of the operations of said at least one first sequence of semantically classified operations, rewarding said autonomous agent with a numerical reward value or positive reinforcement for each success in the test attempt to perform a certain operation and penalizing said autonomous agent with a numerical penalty value or negative reinforcement for each failure in the test attempt to perform a certain operation, and
- guiding said autonomous agent in learning the logical constraints that link the precedence relationships between said operations of said at least one first sequence of operations through the observation of the positive or negative reinforcements obtained in the test attempts to perform each of the operations of said at least one first sequence of operations.

8. System (10) for automatic detection of cyber vulnerabilities in an application programming interface, API, in particular having an architecture of the Representational State Transfer or REST type or a GraphQL architecture, comprising:
- a server device (11),
- a client device (12), in electronic communication with said server by means of a telematic network (13), comprising an API (14) to be tested and at least one API specification (SF) associated with said API (14), said data file or API specification file comprising information relating to API endpoints, that is the position of the resources in said API (14), and the operations that can be performed in each API endpoint with said resources,
said server device (11) comprising:
- a module or component for receiving and/or reading (15) said API specification file (SF),
- a module or component for extracting and analyzing (16) said information from said API specification file (SF),
- a classification module or component (17) configured to receive said information as input from said extraction and analysis module or component (16) and semantically classify, using a natural language processing or NLP algorithm, each operation available for each endpoint API and/or each API endpoint by assigning it to a respective class of operations of a pre-set plurality of classes of operations, each class of operations being associated with a certain functionality or semantics of an operation and/or with a certain typology or functionality or semantics of an API endpoint and including at least a first string of characters that identifies it, and therefore configured to provide at least a first sequence of semantically classified operations as output,
- a sorting module or component (18) configured to receive at least the first sequence of semantically classified operations as input and sort them logically, using a machine learning or ML algorithm, identifying the logical constraints that link the precedence relationships between the operations of said at least a first sequence of operations, and therefore configured to provide at least a second logically sorted sequence of operations as output,
- a penetration test module or component (19) configured to test said at least one second sequence of operations by means of at least one respective attack module, that is a data file which when executed generates at least one request or call to said API (14) which executes or simulates at least one security attack associated with the execution of each operation of said at least one second sequence of operations, and
- a detection module or component (20) configured to detect, if at least one security attack executed via the respective attack module has been successful, a cyber vulnerability of said API (14).

9. System according to the previous claim, wherein said server device (11) is configured to perform the method according to any one of claims 2 to 7.

10. Computer program or software product for the automatic detection of cyber vulnerabilities in an application programming interface or API, in particular having an architecture of the Representational State Transfer or REST type or a GraphQL architecture, loaded into a memory of a processor of a server device (11) of a system (10) according to claim 8 or 9, said computer program or software comprising a plurality of instructions which, when executed by said processor, cause said server device (11) to carry out the method according to any of claims 1 to 7.

## Patentansprüche

1. Computerimplementiertes Verfahren (1) zur automatischen Erkennung von Cyberschwachstellen in einer Anwendungsprogrammierschnittstelle API, umfassend die Schritte des:
- Empfangens und/oder Lesens (2) mindestens einer API-Spezifikationsdatei, die einer zu testenden API zugeordnet ist oder diese beschreibt, wobei die besagte API-Spezifikationsdatei mindestens Informationen in Bezug auf API-Endpunkte, das heißt den Standort der Ressourcen in der besagten API, und die Operationen, die in jedem API-Endpunkt mit den besagten Ressourcen durchgeführt werden können, enthält,
- Extrahierens und Analysierens (3) der besagten Informationen aus der besagten API-Spezifikationsdatei,
- semantischen Klassifizierens (4), unter Verwendung der besagten Informationen, die in dem besagten Schritt des Extrahierens und Analysierens (3) und mittels eines Algorithmus zur natürlichen Sprachverarbeitung oder NLP extrahiert sind, jeder für jeden API-Endpunkt verfügbaren Operation und/oder jedes API-Endpunkts, indem sie einer jeweiligen Klasse von Operationen aus einer voreingestellten Vielzahl von Klassen von Operationen zugewiesen wird, wobei jede Klasse von Operationen einer bestimmten Funktionalität oder Semantik einer Operation und/oder einer bestimmten Typologie, Funktionalität oder Semantik eines API-Endpunkts zugeordnet ist und mindestens eine erste Zeichenfolge enthält, die sie identifiziert,
- Erzeugens oder Verarbeitens (5) mindestens einer ersten Sequenz von Operationen der besagten API auf der Grundlage der im vorherigen Schritt ausgeführten semantischen Klassifizierung,
- logischen Sortierens (6), unter Verwendung eines Algorithmus des maschinellen Lernens oder ML, der besagten mindestens einen ersten Sequenz von Operationen, die im vorherigen Schritt erzeugt oder verarbeitet wurde, indem die logischen Einschränkungen, die die Vorrangigkeitsbeziehungen zwischen den Operationen der besagten mindestens einen ersten Sequenz von Operationen miteinander verknüpfen, identifiziert werden,
- Erzeugens oder Verarbeitens (7) mindestens einer zweiten Sequenz von Operationen der besagten API auf der Grundlage des logischen Sortierens der besagten mindestens einen ersten Sequenz von Operationen, die im vorherigen Schritt ausgeführt wurde,
- Durchführens (8) eines Penetrationstests der besagten API durch Testen der besagten mindestens einen zweiten Sequenz von Operationen unter Verwendung mindestens eines jeweiligen Angriffsmoduls, das heißt einer Datendatei, die, wenn ausgeführt, mindestens eine Anfrage oder einen Aufruf an die besagte API erzeugt, wodurch mindestens ein Sicherheitsangriff ausgeführt oder simuliert wird, der der Ausführung jeder Operation der besagten mindestens einen zweiten Sequenz von Operationen zugeordnet ist, und, falls der besagte mindestens eine Sicherheitsangriff, der über das jeweilige Angriffsmodul ausgeführt wurde, erfolgreich war, das Erkennen einer Cyber-Schwachstelle der besagten API.

2. Verfahren nach dem vorherigen Anspruch, worin der besagte Extraktions- und Analysierschritt (3) die Schritte beinhaltet des:
- Parsens der besagten API-Spezifikationsdatei, und
- Bestimmens der Abhängigkeiten oder Referenzen zwischen den API-Endpunkten der besagten API-Spezifikationsdatei.

3. Verfahren nach irgendeinem der vorherigen Ansprüche, worin der besagte Schritt des semantischen Klassifizierens (4) die Schritte umfasst des:
- Identifizierens, für eine gegebene Operation eines jeweiligen API-Endpunkts, der in der besagten API-Spezifikationsdatei enthalten ist, und/oder für einen API-Endpunkt, mindestens eines diese Operation und/oder diesen Endpunkt beschreibenden oder identifizierenden ersten Felds oder Attributs, das mindestens eine zweite Zeichenfolge enthält,
- Vergleichens der besagten mindestens einen zweiten Zeichenfolge mit der jeweiligen ersten Zeichenfolge der besagten Vielzahl von Klassen von Operationen,
- Berechnens eines entsprechenden semantischen Ähnlichkeitswerts zwischen der besagten mindestens einen zweiten Zeichenfolge und jeder ersten Zeichenfolge der besagten Vielzahl von Klassen von Operationen mittels des besagten NLP-Algorithmus,
- Zuordnens der besagten Operation zu einer entsprechenden Klasse von Operationen auf der Grundlage des maximalen semantischen Ähnlichkeitswerts, der zwischen der besagten mindestens einen zweiten Zeichenfolge und jeder ersten Zeichenfolge berechnet wurde, und
- Wiederholens der vorherigen Schritte, das heißt des Schritts des Identifizierens, Vergleichens, Berechnens und Zuordnens, für jede Operation jedes API-Endpunkts und/oder für jeden API-Endpunkt.

4. Verfahren nach dem vorherigen Anspruch, worin der besagte Berechnungsschritt die Schritte beinhaltet des:
- Bereitstellens eines trainierten neuronalen Netzwerks unter Verwendung eines Korpus von Texten, umfassend eine Vielzahl von Wörtern, um jedes Wort des besagten Korpus von Texten einem bestimmten semantischen Kontext auf der Grundlage der Semantik der Wörter, die ihm in einem Satz vorausgehen oder nachfolgen, zuzuordnen, und
- Verwendens des besagten neuronalen Netzwerks zur Verarbeitung eines semantischen Ähnlichkeitswerts zwischen der besagten mindestens einen zweiten Zeichenfolge und jeder ersten Zeichenfolge der besagten voreingestellten Vielzahl von Klassen von Operationen.

5. Verfahren nach Anspruch 3 oder 4, worin der besagte Zuordnungsschritt die Schritte umfasst des:
- Festlegens einer Ähnlichkeitsschwellenbedingung, und
- Zuweisens der besagten Operation zu einer entsprechenden Klasse von Operationen nur dann, wenn der maximale semantische Ähnlichkeitswert, der zwischen der besagten mindestens einen zweiten Zeichenfolge und jeder ersten Zeichenfolge berechnet wurde, die besagte Ähnlichkeitsschwellenbedingung erfüllt.

6. Verfahren nach irgendeinem der vorherigen Ansprüche, worin der besagte Schritt des logischen Sortierens (6) durch einen Algorithmus des verstärkenden Lernens durchgeführt wird.

7. Verfahren nach dem vorherigen Anspruch, worin der besagte Schritt des logischen Sortierens (6) die Schritte beinhaltet des:
- Verwendens eines autonomen Agenten zur Durchführung oder Simulation der Ausführung der Operationen der besagten mindestens einen ersten Sequenz von semantisch klassifizierten Operationen, Belohnens des besagten autonomen Agenten mit einem numerischen Belohnungswert oder einer positiven Verstärkung für jeden Erfolg in dem Testversuch zur Durchführung einer bestimmten Operation und Bestrafens des besagten autonomen Agenten mit einem numerischen Strafwert oder einer negativen Verstärkung für jeden Fehlschlag in dem Testversuch zur Durchführung einer bestimmten Operation, und
- Anleitens des besagten autonomen Agenten beim Erlernen der logischen Einschränkungen, die die Vorrangigkeitsbeziehungen zwischen den besagten Operationen der besagten mindestens einen ersten Sequenz von Operationen miteinander verknüpfen durch die Beobachtung der positiven oder negativen Verstärkungen, die bei den Testversuchen zur Durchführung jeder der Operationen der besagten mindestens einen ersten Sequenz von Operationen erhalten werden.

8. System (10) zur automatischen Erkennung von Cyberschwachstellen in einer Anwendungsprogrammierschnittstelle API, insbesondere mit einer Architektur vom Typ der repräsentativen Zustandsübertragung oder REST oder einer GraphQL-Architektur, umfassend:
- ein Servergerät (11),
- ein Client-Gerät (12), in elektronischer Kommunikation mit dem besagten Server mittels eines Telematiknetzwerks (13), umfassend eine zu testende API (14) und mindestens eine API-Spezifikation (SF), die der besagten API (14) zugeordnet ist, wobei die besagte Datendatei oder API-Spezifikationsdatei Informationen in Bezug auf API-Endpunkte, das heißt die Position der Ressourcen in der besagten API (14), und die Operationen, die in jedem API-Endpunkt mit diesen Ressourcen durchgeführt werden können, umfasst,
das besagte Servergerät (11) umfassend:
- ein Modul oder eine Komponente zum Empfangen und/oder Lesen (15) der besagten API-Spezifikationsdatei (SF),
- ein Modul oder eine Komponente zum Extrahieren und Analysieren (16) der besagten Informationen aus der besagten API-Spezifikationsdatei (SF),
- ein Klassifizierungsmodul oder eine Komponente (17), das/die konfiguriert ist, um die besagten Informationen als Eingabe von dem besagten Extraktions- und Analysemodul oder der besagten Komponente (16) zu empfangen und, unter Verwendung eines Algorithmus zur natürlichen Sprachverarbeitung oder NLP, jede für jeden API-Endpunkt und/oder jeden API-Endpunkt verfügbare Operation semantisch zu klassifizieren, indem sie einer jeweiligen Klasse von Operationen aus einer voreingestellten Vielzahl von Klassen von Operationen zugewiesen wird, wobei jede Klasse von Operationen einer bestimmten Funktionalität oder Semantik einer Operation und/oder einer bestimmten Typologie, Funktionalität oder Semantik eines API-Endpunkts zugeordnet ist und mindestens eine erste Zeichenfolge enthält, die sie identifiziert, und somit konfiguriert ist, um mindestens eine erste Sequenz von semantisch klassifizierten Operationen als Ausgabe bereitzustellen,
- ein Sortiermodul oder eine Komponente (18), das/die konfiguriert ist, um mindestens die erste Sequenz von semantisch klassifizierten Operationen als Eingabe zu empfangen und diese, unter Verwendung eines Algorithmus des maschinellen Lernens oder ML logisch sortiert, wobei die logischen Einschränkungen, die die Vorrangigkeitsbeziehungen zwischen den Operationen der besagten mindestens einen ersten Sequenz von Operationen miteinander verknüpfen, identifiziert werden, und somit konfiguriert ist, um mindestens eine zweite logisch sortierte Sequenz von Operationen als Ausgabe bereitzustellen,
- ein Penetrationstest-Modul oder eine Komponente (19), das/die konfiguriert ist, um die besagte mindestens eine zweite Sequenz von Operationen mittels mindestens eines jeweiligen Angriffsmoduls zu testen, das heißt einer Datendatei, die, wenn ausgeführt, mindestens eine Anfrage oder einen Aufruf an die besagte API (14) erzeugt, wodurch mindestens ein Sicherheitsangriff ausgeführt oder simuliert wird, der der Ausführung jeder Operation der besagten mindestens einen zweiten Sequenz von Operationen zugeordnet ist, und
- ein Erkennungsmodul oder eine Komponente (20), das/die konfiguriert ist, um, wenn mindestens ein über das jeweilige Angriffsmodul ausgeführter Sicherheitsangriff erfolgreich war, eine Cyber-Schwachstelle der besagten API (14) zu erkennen.

9. System nach dem vorherigen Anspruch, worin das besagte Servergerät (11) konfiguriert ist, um das Verfahren nach irgendeinem der Ansprüche 2 bis 7 durchzuführen.

10. Computerprogramm oder Softwareprodukt zur automatischen Erkennung von Cyberschwachstellen in einer Anwendungsprogrammierschnittstelle API, insbesondere mit einer Architektur vom Typ der repräsentativen Zustandsübertragung oder REST oder einer GraphQL-Architektur, das in einen Speicher eines Prozessors eines Servergeräts (11) eines Systems (10) nach Anspruch 8 oder 9 geladen ist, wobei das besagte Computerprogramm oder die besagte Software eine Vielzahl von Anweisungen umfasst, die, wenn sie von dem besagten Prozessor ausgeführt werden, bewirken, dass das besagte Servergerät (11) das Verfahren nach einem der Ansprüche 1 bis 7 ausführt.

## Revendications

1. Procédé implémenté par ordinateur (1) pour la détection automatique des vulnérabilités cybernétiques dans une interface de programmation d'application, API, comportant les étapes de :
- recevoir et/ou lire (2) au moins un fichier de spécification d'API associé ou descriptif d'une API à tester, ledit fichier de spécification d'API comprenant au moins des informations relatives aux points de terminaison d'API, c'est-à-dire l'emplacement des ressources dans ladite API, et les opérations qui peuvent être réalisées dans chaque point de terminaison d'API avec lesdites ressources,
- extraire et analyser (3) lesdites informations à partir dudit fichier de spécification d'API,
- classer sémantiquement (4), en utilisant lesdites informations extraites dans ladite étape d'extraire et analyser (3) et au moyen d'un algorithme de traitement automatique du langage naturel ou NLP, chaque opération disponible pour chaque point de terminaison d'API et/ou chaque point de terminaison d'API en l'affectant à une classe d'opérations respective d'une pluralité prédéfinie de classes d'opérations, chaque classe d'opérations étant associée à une certaine fonctionnalité ou sémantique d'une opération et/ou à une certaine typologie ou fonctionnalité ou sémantique d'un point de terminaison d'API et comprenant au moins une première chaîne de caractères qui l'identifie,
- générer ou traiter (5) au moins une première séquence d'opérations de ladite API sur la base de la classification sémantique effectuée à l'étape précédente,
- trier logiquement (6), en utilisant un algorithme d'apprentissage automatique ou ML, ladite au moins une première séquence d'opérations générée ou traitée à l'étape précédente en identifiant les contraintes logiques qui lient les relations de précédence entre les opérations de ladite au moins une première séquence d'opérations,
- générer ou traiter (7) au moins une deuxième séquence d'opérations de ladite API sur la base du tri logique de ladite au moins une première séquence d'opérations effectuée à l'étape précédente,
- réaliser (8) un test d'intrusion de ladite API en testant ladite au moins une deuxième séquence d'opérations en utilisant au moins un module d'attaque respectif, c'est-à-dire un fichier de données qui, lorsqu'il est exécuté, génère au moins une requête ou un appel à ladite API qui exécute ou simule au moins une attaque de sécurité associée à l'exécution de chaque opération de ladite au moins une deuxième séquence d'opérations, et si ladite au moins une attaque de sécurité exécutée via le module d'attaque respectif a réussi, détecter une vulnérabilité cybernétique de ladite API.

2. Procédé selon la revendication précédente, dans lequel ladite étape d'extraire et analyser (3) comprend les étapes suivantes :
- analyser ledit fichier de spécification d'API, et
- déterminer les dépendances ou références entre les points de terminaison d'API dudit fichier de spécification d'API.

3. Procédé selon l'une quelconque des revendications précédentes, dans lequel ladite étape de classer sémantiquement (4) comprend les étapes de :
- identifier, pour une opération donnée d'un point de terminaison d'API respectif présent dans ledit fichier de spécification d'API et/ou pour un point de terminaison d'API, au moins un premier champ ou attribut décrivant ou identifiant cette opération et/ou ce point de terminaison, qui comprend au moins une deuxième chaîne de caractères,
- comparer ladite au moins une deuxième chaîne de caractères à chaque première chaîne de caractères respective de ladite pluralité de classes d'opérations,
- calculer une valeur de similarité sémantique correspondante entre ladite au moins une deuxième chaîne de caractères et chaque première chaîne de caractères de ladite pluralité de classes d'opérations au moyen dudit algorithme NLP,
- associer ladite opération à une classe d'opérations correspondante sur la base de la valeur de similarité sémantique maximale calculée entre ladite au moins une deuxième chaîne et chaque première chaîne, et
- itérer les étapes précédentes, c'est-à-dire l'étape d'identifier, comparer, calculer et associer, pour chaque opération de chaque point de terminaison d'API et/ou pour chaque point de terminaison d'API.

4. Procédé selon la revendication précédente, dans lequel ladite étape de calculer comprend les étapes de :
- fournir un réseau neuronal entraîné, en utilisant un corpus de textes comportant une pluralité de mots, pour associer chaque mot dudit corpus de textes à un contexte sémantique spécifique sur la base de la sémantique des mots qui le précèdent ou le suivent dans une phrase, et
- utiliser ledit réseau neuronal pour traiter une valeur de similarité sémantique entre ledit au moins une deuxième chaîne de caractères et chaque première chaîne de caractères de ladite pluralité prédéfinie de classes d'opérations.

5. Procédé selon la revendication 3 ou 4, dans lequel ladite étape d'associer comprend les étapes de :
- définir une condition de seuil de similarité, et
- affecter ladite opération à une classe d'opérations correspondante seulement si la valeur de similarité sémantique maximale calculée entre au moins une deuxième chaîne et chaque première chaîne satisfait ladite condition de seuil de similarité.

6. Procédé selon quelconque des revendications précédentes, dans lequel ladite étape de trier logiquement (6) est réalisée par un algorithme d'apprentissage par renforcement.

7. Procédé selon la revendication précédente, dans lequel ladite étape de trier logiquement (6) comprend les étapes de :
- utiliser un agent autonome pour réaliser ou simuler l'exécution des opérations de ladite au moins une première séquence d'opérations classées sémantiquement, récompenser ledit agent autonome avec une valeur de récompense numérique ou un renforcement positif pour chaque succès dans la tentative de test pour réaliser une certaine opération et pénaliser ledit agent autonome avec une valeur de pénalité numérique ou un renforcement négatif pour chaque échec lors de la tentative de test pour réaliser une certaine opération, et
- guider ledit agent autonome dans l'apprentissage des contraintes logiques qui lient les relations de précédence entre lesdites opérations de ladite au moins une première séquence d'opérations à travers l'observation des renforcements positifs ou négatifs obtenus dans les tentatives de test pour réaliser chacune des opérations de ladite au moins une première séquence d'opérations.

8. Système (10) de détection automatique de vulnérabilités cybernétiques dans une interface de programmation d'application, API, notamment ayant une architecture du type Transfert d'Etat Représentatif ou REST ou une architecture GraphQL, comportant :
- un dispositif serveur (11),
- un dispositif client (12), en communication électronique avec ledit serveur au moyen d'un réseau télématique (13), comportant une API (14) à tester et au moins une spécification d'API (SF) associée à ladite API (14), ledit fichier de données ou fichier de spécification d'API comportant des informations relatives à des points de terminaison d'API, c'est-à-dire la position des ressources dans ladite API (14), et les opérations qui peuvent être réalisées dans chaque point de terminaison d'API avec lesdites ressources,
ledit dispositif serveur (11) comportant :
- un module ou composant destiné à recevoir et/ou à lire (15) ledit fichier de spécification d'API (SF),
- un module ou composant pour extraire et analyser (16) lesdites informations à partir dudit fichier de spécification d'API (SF),
- un module ou composant de classification (17) configuré pour recevoir ledites informations en entrée dudit module ou composant d'extraction et d'analyse (16) et classer sémantiquement, en utilisant un algorithme de traitement du langage naturel ou NLP, chaque opération disponible pour chaque point de terminaison d'API et/ou chaque point de terminaison d'API en l'affectant à une classe d'opérations respective d'une pluralité prédéfinie de classes d'opérations, chaque classe d'opérations étant associée à une certaine fonctionnalité ou sémantique d'une opération et/ou à une certaine typologie ou fonctionnalité ou sémantique d'un point de terminaison d'API et comprenant au moins une première chaîne de caractères qui l'identifie, et par conséquent configuré pour fournir au moins une première séquence d'opérations classées sémantiquement en sortie,
- un module ou composant de tri (18) configuré pour recevoir au moins la première séquence d'opérations classées sémantiquement en entrée et les trier logiquement, en utilisant un algorithme d'apprentissage automatique ou ML, identifiant les contraintes logiques qui lient les relations de précédence entre les opérations de ladite au moins une première séquence d'opérations, et par conséquent configuré pour fournir au moins une deuxième séquence d'opérations triées logiquement en sortie,
- un module ou composant de test d'intrusion (19) configuré pour tester ladite au moins une deuxième séquence d'opérations au moyen d'au moins un module d'attaque respectif, c'est-à-dire un fichier de données qui, lorsqu'il est exécuté, génère au moins une requête ou un appel à ladite API (14) qui exécute ou simule au moins une attaque de sécurité associée à l'exécution de chaque opération de ladite au moins une deuxième séquence d'opérations, et
- un module ou composant de détection (20) configuré pour détecter, si au moins une attaque de sécurité exécutée via le module d'attaque respectif a réussi, une vulnérabilité cybernétique de ladite API (14).

9. Système selon la revendication précédente, dans lequel ledit dispositif serveur (11) est configuré pour réaliser la méthode selon l'une quelconque des revendications 2 à 7.

10. Programme informatique ou produit logiciel pour la détection automatique de vulnérabilités cybernétiques dans une interface de programmation d'application ou API, notamment ayant une architecture du type Transfert d'Etat Représentatif ou REST ou une architecture GraphQL, chargé dans la mémoire d'un processeur d'un dispositif serveur (11) d'un système (10) selon la revendication 8 ou 9, ledit programme informatique ou logiciel comportant une pluralité d'instructions qui, lorsqu'elles sont exécutées par ledit processeur, amènent ledit dispositif serveur (11) à mettre en œuvre la méthode selon quelconque des revendications 1 à 7.
